# EUROPÄISCHE PATENTSCHRIFT

(11) **EP 2 732 175 B1**
(45) Veröffentlichungstag und Bekanntmachung des Hinweises auf die Patenterteilung: **23.09.2020**
(21) Anmeldenummer: 12769878.5
(22) Anmeldetag: 21.06.2012
(51) Int. Cl.: F16D 25/08

(54) **ZUSAMMENBAU VON AUSRÜCKEINRICHTUNG UND KUPPLUNGSGLOCKE**
ASSEMBLY OF A RELEASE DEVICE AND A CLUTCH HOUSING
ASSEMBLAGE D'UN DISPOSITIF DE DÉBRAYAGE ET D'UNE CLOCHE D'EMBRAYAGE

(30) Priorität: 11.07.2011 DE 102011107070
(43) Veröffentlichungstag der Anmeldung: 21.05.2014
(73) Patentinhaber: Schaeffler Technologies AG & Co. KG, 91074 Herzogenaurach (DE)
(72) Erfinder: BOSNJAK, Daniel, 67470 Seltz (FR); KRAHTOV, Luben, 76530 Baden-Baden (DE)
(86) Internationale Anmeldenummer: PCT/DE2012/000636
(87) Internationale Veröffentlichungsnummer: WO 2013/007231

(56) Entgegenhaltungen:
- EP-A1- 0 185 176
- EP-A2- 1 887 242
- WO-A1-2006/047981
- WO-A1-2011/103894
- DE-A1-102010 035 137
- JP-A- H06 341 462

## Beschreibung

Die Erfindung betrifft einen Zusammenbau von Ausrückeinrichtung und Kupplungsglocke. Insbesondere betrifft die Erfindung eine Ausrückeinrichtung zum axialen Betätigen einer Reibkupplung.

Zwischen einem Antriebsmotor und einem Schaltgetriebe eines Kraftfahrzeugs wird eine Reibkupplung, beispielsweise eine in einem Ölbad laufende Lamellenkupplung verwendet, die eine Anzahl Stahl- und Reiblamellen umfasst, wobei jeweils eine Sorte Lamellen mit einer Abtriebswelle des Antriebsmotors bzw. einer Antriebswelle des Schaltgetriebes drehmomentschlüssig verbunden ist. Die Lamellen sind in axialer Richtung abwechselnd angeordnet und werden mittels Federkraft aneinander gepresst, so dass ein Reibschluss entsteht, der die Abtriebswelle des Antriebsmotors mit der Antriebswelle des Schaltgetriebes drehmomentschlüssig verbindet. Um die Lamellenkupplung auszurücken, wird ein Ausrücklager entgegen der Kraftrichtung der Feder betätigt, so dass der Reibschluss zwischen den Lamellen aufgehoben und der Drehmomentschluss zwischen der Abtriebswelle und der Antriebswelle unterbrochen ist.

Um das Ausrücklager axial zu betätigen, sind unterschiedliche Ausführungsformen von Ausrückeinrichtungen bekannt. In einer Ausführungsform wird ein hydraulischer Aktuator verwendet, der ringförmig um die Abtriebswelle des Antriebsmotors angeordnet ist. In einem Schaltgetriebe mit Doppelkupplung sind dementsprechend zwei Lamellenkupplungen verbaut, die durch konzentrisch um die Abtriebswelle des Antriebsmotors angeordnete hydraulische Ausrückeinrichtungen unabhängig voneinander betätigt werden können.

Aus der EP 1 887 242 A2, welche als nächstliegender Stand der Technik angesehen wird, ist eine Einrichtung zur pneumatischen Betätigung einer Fahrzeugkupplung offenbart, welche einen Aktuator zur axialen Betätigung der Reibkupplung, der dazu eingerichtet ist, mittels Druckluft hydraulisch betätigt zu werden, sowie ein Trägerelement mit einem integrierten Befestigungspunkt zur Abstützung des Aktuators an einer Kupplungsglocke aufweist, wobei im Trägerelement ein axialer Anschluss für Druckluft vorgesehen ist. Das Trägerelement weist ferner eine axiale Anlagefläche zur Anlage an der Kupplungsglocke auf, wobei die axiale Anlagefläche den axialen Anschluss für Druckluft umgibt bzw. einschließt.

Weiterer Stand der Technik ist aus der DE 10 2010 035 137 A1, der EP 0 185 176 A1 sowie der JP H06 341462 offenbart.

Es besteht das Bedürfnis für eine Ausrückeinrichtung für eine Reibupplung mit einer verbesserten Montagefähigkeit zum Einsatz an einem modernen Getriebe unter beengten Platzverhältnissen unter Gewährleistung einer guten Abdichtung in Bezug auf Hydraulikfluid. Die Erfindung löst diese Aufgabe mittels einer Ausrückeinrichtung mit den Merkmalen von Anspruch 1. Unteransprüche geben bevorzugte Ausführungsformen wieder.

### Offenbarung der Erfindung

Eine erfindungsgemäße Ausrückeinrichtung für eine Reibkupplung umfasst einen Aktuator zur axialen Betätigung der Reibkupplung, wobei der Aktuator dazu eingerichtet ist, mittels eines Fluids hydraulisch betätigt zu werden, und ein Trägerelement mit einem integrierten Befestigungspunkt zur Abstützung des Aktuators an einer Kupplungsglocke. Dabei ist im Trägerelement ein axialer Anschluss für das hydraulische Fluid vorgesehen und das Trägerelement mit dem Gehäuse der Ausrückeinrichtung einstückig ausgeführt. Somit bildet das Gehäuse in einer derartigen Ausführungsform ein Trägergehäuse aus.

Das Trägerelement kann somit die Aufgabe der Abstützung der Ausrückeinrichtung an der Kupplungsglocke und gleichzeitig die der Führung des Fluids übernehmen. Die Ausrückeinrichtung kann dadurch einfacher und kostengünstiger herstellbar sein. Die Befestigung des Trägerelements kann ein separates Montagebauteil, wie eine Spannpratze, überflüssig machen. Die fluide Verbindung zwischen dem axialen hydraulischen Anschluss und dem korrespondierenden hydraulischen Anschluss in der Kupplungsglocke kann automatisch während einer Montage der Ausrückeinrichtung an der Kupplungsglocke hergestellt werden.

Radiale Abstände der Befestigungspunkte zu einer Drehachse der Reibkupplung können außerhalb eines radialen Umrisses der Reibkupplung liegen. Dadurch kann in der Kupplungsglocke montierbar sein, wenn die Reibkupplung in axialer Richtung bereits auf die Ausrückeinrichtung aufgesetzt ist. Auf diesem Weg kann die Ausrückeinrichtung gemeinsam mit der Reibkupplung als separat handhabbare Einheit montierbar und gegebenenfalls mit dieser integriert aufgebaut sein. Eine solche Anordnung der Ausrückeinrichtung wird auch "deckelfest" genannt.

In einer bevorzugten Ausführungsform ist die Ausrückeinrichtung ferner dazu eingerichtet, eine weitere Reibkupplung unabhängig von der anderen Reibkupplung auszurücken, wobei das Trägerelement einen weiteren axialen Anschluss für Fluid umfasst.

Das Trägerelement weist eine axiale Anlagefläche zur Anlage an der Kupplungsglocke im Bereich der Drehachse auf und das Trägerelement ist so geformt, dass die Befestigungspunkte axial jeweils durch einen vorbestimmten Spalt von der Kupplungsglocke getrennt sind, wenn die Anlagefläche an der Kupplungsglocke anliegt, so dass das Trägerelement durch annähern der Befestigungspunkte an die Kupplungsglocke axial vorgespannt werden kann, um die axialen Anschlüsse fluiddicht zu verbinden.

Durch die Vorspannung des Trägerelements im Bereich der axialen Anschlüsse kann sichergestellt werden, dass die Anschlüsse auch dann fluiddicht sind, wenn das Fluid zum Ausrücken einer der Reibkupplungen unter Druck gesetzt ist, so dass der hydraulische Druck bestrebt ist, das Trägerelement axial von der Kupplungsglocke zu entfernen.

In einer bevorzugten Ausführungsform ist ein axiales Federelement zur Verbindung der Befestigungspunkte mit der Kupplungsglocke vorgesehen. Das Federelement ist dazu eingerichtet, sicherzustellen, dass eine vorbestimmte Vorspannung des Trägerelements eingehalten bzw. nicht überschritten wird.

Das Trägerelement ist einstückig ausgebildet und umfasst sowohl die Anschlüsse als auch die Befestigungspunkte bzw. Verbindungselemente zu den Befestigungspunkten. In einer anderen Ausführungsform umfasst das Trägerelement ein hydraulisches Anschlusselement zur Aufnahme der Anschlüsse und ein am Anschlusselement befestigtes, im Wesentlichen scheibenförmiges Verbindungselement zur Anbringung an der Kupplungsglocke.

Das scheibenförmige Verbindungselement kann kostengünstig beispielsweise aus einem Blech herstellbar sein. Das Anschlusselement kann aus einem Leichtmetall oder aus Stahl geformt sein. Befestigungspunkte können sowohl am Anschlusselement als auch am Verbindungselement vorgesehen sein, so dass das Anschlusselement kompakt und Material sparend ausgebildet sein kann, während das Verbindungselement schwach dimensioniert sein kann, da nicht alle Befestigungskräfte des Anschlusselements durch das Verbindungselement geleitet sind. Herstellungskosten können somit gesenkt sein.

Durch das separate Verbindungselement können ein Bauraum und/oder ein Gewicht der Ausrückeinrichtung verringert werden. Ferner können Einsparungen bei der Herstellung der Ausrückeinrichtung erzielbar sein.

In einer Ausführungsform ist eine Passeinrichtung zur Sicherstellung einer eindeutigen rotatorischen Einbaulage des Trägerelements vorgesehen. Einer Fehlzuordnung bzw. Blockade einer der hydraulischen Verbindungen kann dadurch entgegen gewirkt werden.

Benachbarte Winkel zwischen Befestigungspunkten bezüglich der Drehachse können voneinander verschieden sein. Dadurch kann ebenfalls eine rotatorische Einbaulage des Trägerelements bzw. des Verbindungselements sichergestellt werden.

Vorzugsweise umfasst das Trägerelement eine radiale Anlagefläche zur Anlage an der Kupplungsglocke im Bereich der Drehachse, um eine Zentrierung der Ausrückeinrichtung bezüglich der Kupplungsglocke sicherzustellen. Eine Einbaulage der Ausrückeinrichtung kann dadurch weitgehend vordefiniert sein, so dass ein Einbauspiel verringert und eine falsche Einbaulage verhindert werden können.

### Kurze Beschreibung der Figuren

Die Erfindung wird nun mit Bezug auf die beigefügten Figuren genauer beschrieben, in denen:
Figur 1 einen Längsschnitt durch eine Ausrückeinrichtung;
Figuren 2 bis 4 Details der Ausrückeinrichtung aus Figur 1;
Figur 5 perspektivische Ansichten eines Trägerelements einer Ausrückeinrichtung nach den Figuren 1 bis 4; und
Figur 6 perspektivische Ansichten eines Trägerelements einer Ausrückeinrichtung in einer weiteren Ausführungsform
darstellt.

### Genaue Beschreibung der Figuren

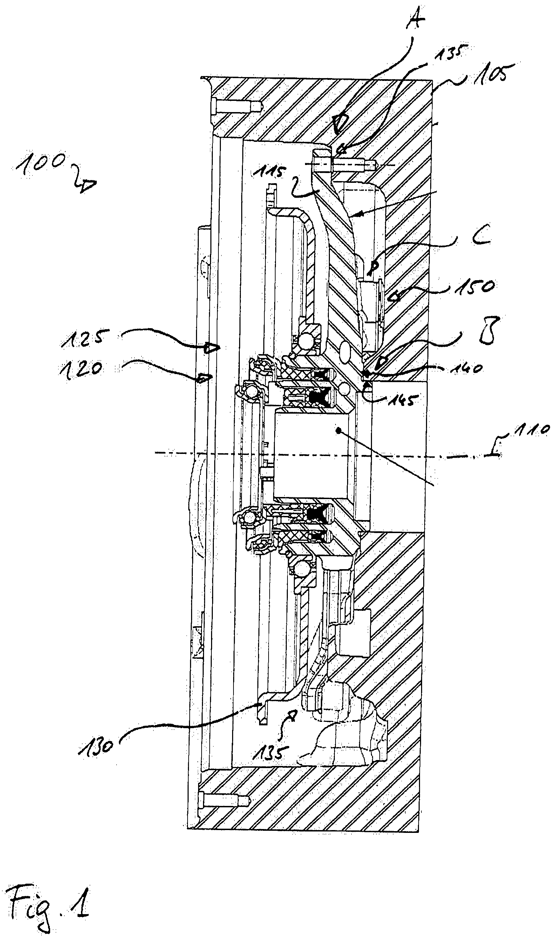

Figur 1 zeigt einen Längsschnitt durch eine Ausrückeinrichtung 100. Die Ausrückeinrichtung 100 ist im montierten Zustand in einer Kupplungsglocke 105 dargestellt. Zwei Reibkupplungen, insbesondere in einem Ölbad laufende Lamellenkupplungen, die unabhängig voneinander mittels der Ausrückeinrichtung 100 axial betätigt bzw. ausgerückt werden können, schließen sich nach links an die Ausrückeinrichtung 100 an und sind nicht dargestellt.

Die Kupplungsglocke 105 ist eine kesselförmige Vertiefung am Gehäuse eines Motors, insbesondere eines Verbrennungsmotors zum Antrieb eines Kraftfahrzeugs. Der Verbrennungsmotor erstreckt sich von Figur 1 aus nach rechts. Eine Abtriebswelle des Verbrennungsmotors (nicht dargestellt) erstreckt sich von der Seite des Verbrennungsmotors nach links durch die Ausrückeinrichtung 100 zu den Lamellenkupplungen. Die Lamellenkupplungen, die Abtriebswelle und Teile der Ausrückeinrichtung 100 sind drehbar um eine Drehachse 110 angeordnet.

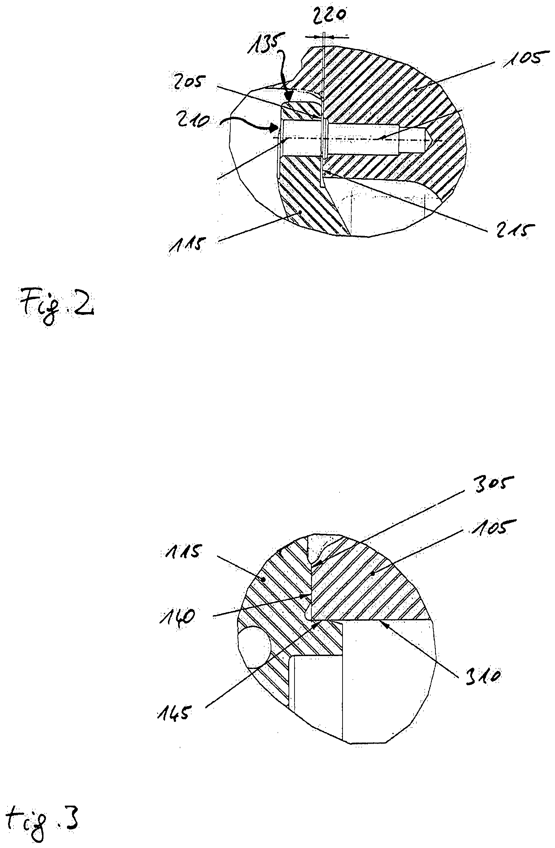

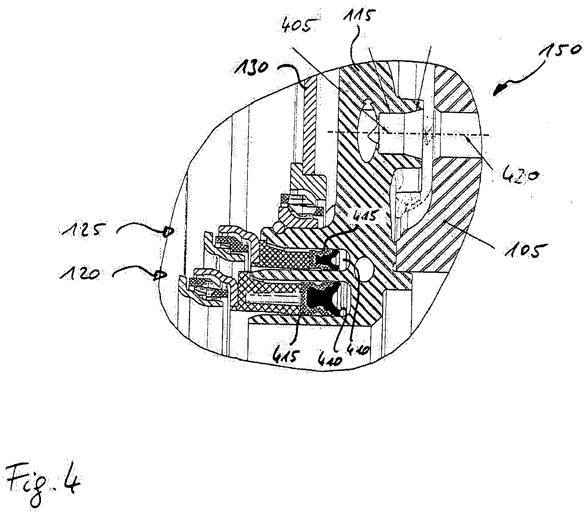

Die Ausrückeinrichtung 100 umfasst ein Trägerelement 115, das einstückig mit dem Gehäuse der Ausrückeinrichtung 100 ausgeführt ist, einen ersten hydraulischen Aktuator 120, einen zweiten hydraulischen Aktuator 125 und einen Kupplungsträger 130. Das Trägerelement 115 ist vorzugsweise aus einem Leichtmetall-Gussteil hergestellt. Das Trägerelement 115 umfasst mehrere Befestigungspunkte 135, von denen einer im Bereich A in Figur 2 genauer dargestellt ist, eine axiale Anlagefläche 140 und eine radiale Anlagefläche 145 im Bereich B, die in Figur 3 näher dargestellt sind, und hydraulische Anschlüsse 150 im Bereich C, die in Figur 4 genauer dargestellt sind. Die Befestigungspunkte 135 liegen bezüglich der Drehachse 110 in Entfernungen, die einen Radius des Kupplungsträgers 130 übersteigen, so dass die Ausrückeinrichtung 100 an der Kupplungsglocke 105 montierbar ist, wenn der Kupplungsträger 130 bereits am Trägerelement 115 befestigt ist.

Die hydraulischen Aktuatoren 120 und 125 sind konzentrisch um die Drehachse 110 angeordnet. Jeder der hydraulischen Aktuatoren 120, 125 ist dazu eingerichtet, eine nach links wirkende Kraft gegenüber der Kupplungsglocke 105 auszuüben, wenn in einer korrespondierenden hydraulischen Zuleitung ein hydraulischer Druck aufgebaut wird. Die Kraft jedes hydraulischen Aktuators 120, 125 wirkt einer Federkraft der zugeordneten Lamellenkupplung entgegen, die die jeweilige Kupplung in axialer Richtung belastet und dadurch einen Kraftschluss herstellt. Beim Betätigen eines der Aktuatoren 120, 125 wird die Federbelastung aufgehoben bzw. die Lamellen oder Reibscheiben werden in axialer Richtung voneinander abgehoben, so dass der Kraftschluss aufgehoben ist.

Der Kupplungsträger 130 ist dazu eingerichtet, ein Widerlager für eine oder beide der Lamellenkupplungen zu bilden. Beispielsweise können Zugfedern, die eine der Lamellenkupplungen in axialer Richtung zusammenpressen, an ihren rechten Enden mit dem Kupplungsträger 130 verbunden sein. Der Kupplungsträger 130 ist mittels eines Wälzkörperlagers 155, vorzugsweise eines Schulterkugellagers, drehbar am Trägerelement 115 angebracht.

Figur 2 zeigt ein Detail der Ausrückeinrichtung 100 aus Figur 1 im dort eingezeichneten Bereich A. Das dargestellte Detail veranschaulicht eine Befestigung des oberen Befestigungspunkts 135 an der Kupplungsglocke 105.

Der Befestigungspunkt 135 ist gebildet durch eine Anlagefläche 205 eines Ausläufers des Trägerelements 115 und eine Aussparung 210 zur Aufnahme einer durch die Anlagefläche 105 verlaufenden Schraube (nicht dargestellt). Die Anlagefläche 205 des Trägerelements 115 ist dazu eingerichtet, in Anlage mit einer Anlagefläche 215 der Kupplungsglocke 105 zu stehen. Das Trägerelement 115 ist jedoch so geformt, dass es im Bereich der Drehachse 110 bereits in axialer Richtung an der Kupplungsglocke 105 anliegt, bevor die Anlageflächen 205 und 215 miteinander in Anlage stehen. Zwischen den Anlageflächen 205 und 215 besteht daher zunächst ein Spalt 220. Durch Einschrauben der Schraube durch die Aussparung 210 nach rechts in die Kupplungsglocke 105 können die Anlageflächen 205 des Trägerelements 115 und 215 der Kupplungsglocke 105 in axialer Richtung aneinander angenähert werden, wobei das Trägerelement 115 unter eine axiale Vorspannung gesetzt wird.

Figur 3 zeigt ein weiteres Detail der Ausrückeinrichtung 100 aus Figur 1 im dort gekennzeichneten Bereich B. Das Detail zeigt Anlageflächen zwischen dem Trägerelement 115 und der Kupplungsglocke 105 im Bereich der Drehachse 110.

Die axiale Anlagefläche 140 des Trägerelements 115 liegt an einer axialen Anlagefläche 305 der Kupplungsglocke 105 an. Diese Anlage verhindert eine weitere Bewegung des Trägerelements 115 nach rechts, wodurch der Spalt 220 in Figur 2 besteht, so lange das Trägerelement 115 spannungsfrei, das heißt im Bereich des Befestigungspunkts 135 nach rechts ungelagert ist.

Die radiale Anlagefläche 145 des Trägerelements 115 steht in Anlage mit einer radialen Anlagefläche 310 der Kupplungsglocke 105. Dabei sind die Anlageflächen 145 und 310 um die Drehachse 110 umlaufend, so dass die Ausrückeinrichtung 100 bezüglich der Kupplungsglocke 105 um die Drehachse 110 zentriert ist.

Figur 4 zeigt noch ein weiteres Detail der Ausrückeinrichtung 100 aus Figur 1 im dort eingezeichneten Bereich C. Das Detail zeigt einen hydraulischen Anschluss 150 der Ausrückeinrichtung 100.

Der hydraulische Anschluss 150 ist einem der hydraulischen Aktuatoren 120, 125 zugeordnet. Ein erster Kanal 405 verläuft innerhalb des Trägerelements 115 in einer Richtung parallel zur Drehachse 110. Nicht vollständig sichtbare weitere Kanäle innerhalb des Trägerelements 115 verbinden den ersten Kanal 405 mit einem Zylinder 410 eines der Aktuatoren 120, 125. Die Zylinder 410 sind ring- bzw. torusförmig um die Drehachse 110 ausgeformt. Korrespondierende, hohlzylinderförmige Kolben 415 sind nach links beweglich in den Zylindern 410 aufgenommen und schließen die Zylinder 410 fluiddicht nach links ab.

Dem ersten Kanal 405 axial fluchtend gegenüber steht ein zweiter Kanal 420, der sich innerhalb der Kupplungsglocke 105 erstreckt. Einander gegenüberliegende Enden der Kanäle 405 und 420 sind jeweils konusförmig geweitet. In einem Bereich innerhalb der konusförmigen Erweiterungen und zwischen einander gegenüber liegenden Enden der Kanäle 405 und 420 ist optional eine elastische Dichtung (nicht dargestellt), beispielsweise ein O-Ring, vorgesehen. Dadurch wird eine fluiddichte Verbindung zwischen dem Kolben 410 des jeweiligen Aktuators 120, 125 und dem zweiten Kanal 420 der Kupplungsglocke 105 hergestellt. Der zweite Kanal 420 kann insbesondere mit einer hydraulischen Steuereinrichtung verbunden sein, die dazu eingerichtet ist, Gangstufen in einem Getriebe anzuwählen, das mit den Kupplungen verbunden ist, die mittels der Aktuatoren 120, 125 betätigt werden können.

Wird ein fluider Druck im zweiten Kanal 420 erhöht, so entsteht eine Kraft, die bestrebt ist, das Trägerelement 115 nach links von der Kupplungsglocke 105 zu entfernen. Durch die Vorspannung des Trägerelements 115 an den Befestigungspunkten 135 wird diese Kraft jedoch auf eine Weise abgestützt, die eine Dichtigkeit im Bereich des Anschlusses 150 sicherstellt.

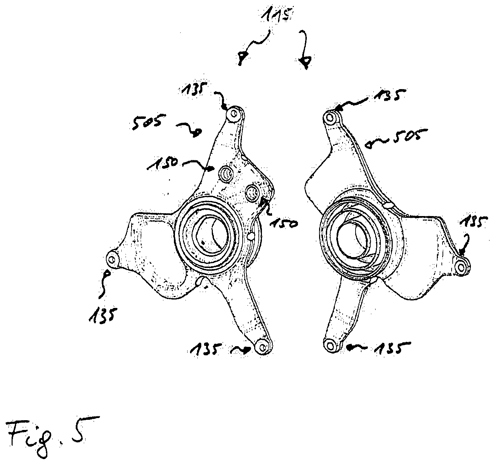

Figur 5 zeigt perspektivische Ansichten des Trägerelements 115 der Ausrückeinrichtung 100 nach Figuren 1 bis 4. Die linke Darstellung zeigt eine der Kupplungsglocke 105 zugewandte Oberfläche, während die rechte Darstellung eine der Kupplungsglocke abgewandte Seite des Trägerelements 115 zeigt. In einem Nabenbereich um die Drehachse 110 (nicht dargestellt) sind im Trägerelement 115 ringförmige Vertiefungen zur Bildung der Zylinder 410 sowie die Anlageflächen 140 und 145 ausgeformt. Von dem nabennahen Bereich erstrecken sich radiale Fortsätze 505 zu den Befestigungspunkten 135. Einer der Fortsätze 505 umfasst die hydraulischen Anschlüsse 150. Die Befestigungspunkte 135 sind nicht gleichmäßig auf einem Umfang verteilt, stattdessen sind Winkel zwischen benachbarten Befestigungspunkten 135 bezüglich der Drehachse 110 ungleich. Dadurch ist eine rotatorische Montageposition des Trägerelements 115 bezüglich der Drehachse 110 an der Kupplungsglocke 105 definiert.

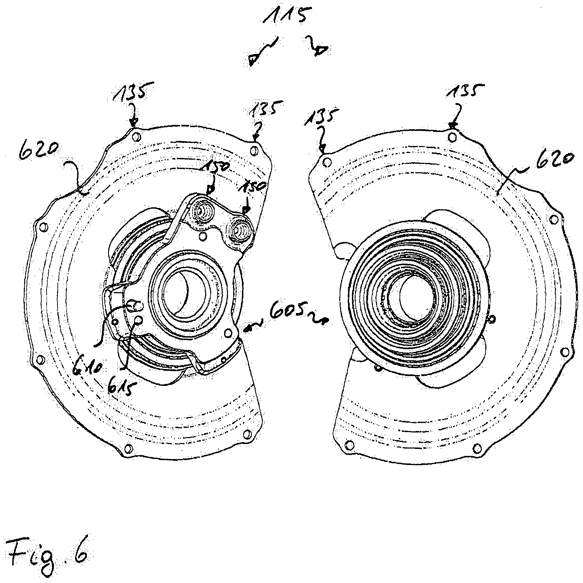

Figur 6 zeigt perspektivische Ansichten des Trägerelements 115 der Ausrückeinrichtung 100 in einer weiteren Ausführungsform. In einem linken Bereich ist eine der Kupplungsglocke 105 zugewandte Seite, im rechten Bereich eine der Kupplungsglocke 105 abgewandte Seite des Trägerelements 115 dargestellt. Im Gegensatz zur Darstellung von Figur 5 umfasst das in Figur 6 dargestellte Trägerelement 115 zwei Elemente, die miteinander verbunden sind. Das erste Element ist ein hydraulisches Anschlusselement 605, das im Wesentlichen dem Trägerelement 115 von Figur 5 ohne die Fortsätze 505 entspricht. Zusätzlich sind ein Passstift 610 und Bohrungen 615 zur Aufnahme von weiteren Passstiften vorgesehen, um eine rotatorisch eindeutige Montageposition des hydraulischen Anschlusselements 605 zu definieren.

Als zweites Element umfasst das in Figur 6 dargestellte Trägerelement 115 ein Verbindungselement 620, das mit dem Anschlusselement 605 beispielsweise mittels einer Presspassung verbunden ist. Das Verbindungselement 620 ist im Wesentlichen scheibenförmig und kann eine oder mehrere umlaufenden Sicken oder Riefen umfassen, um axiale Federeigenschaften des Verbindungselements 620 zu verbessern. Zur verbesserten Darstellung ist im linken wie im rechten Bereich jeweils ein Abschnitt des Verbindungselements 620 abgeschnitten dargestellt. Die Befestigungspunkte 135 liegen in einer größeren Vielzahl als in der Ausführungsform von Figur 5 vor und können gleichmäßig auf einem Umfang um die Drehachse 110 (nicht dargestellt) verteilt sein.

### Bezugszeichenliste

- 100: Ausrückeinrichtung
- 105: Kupplungsglocke
- 110: Drehachse
- 115: Trägerelement
- 120: erster hydraulischer Aktuator
- 125: zweiter hydraulischer Aktuator
- 130: Kupplungsträger
- 135: Befestigungspunkte
- 140: axiale Anlagefläche des Trägerelements
- 145: radiale Anlagefläche des Trägerelements
- 150: hydraulischer Anschluss
- 155: Schulterkugellager

- 205: axiale Anlagefläche des Trägerelements
- 210: Aussparung
- 215: axiale Anlagefläche der Kupplungsglocke
- 220: Spalt

- 305: axiale Anlagefläche der Kupplungsglocke
- 310: radiale Anlagefläche der Kupplungsglocke

- 405: erster Kanal
- 410: Zylinder
- 415: Kolben
- 420: zweiter Kanal

- 505: Fortsatz

- 605: hydraulisches Anschlusselement
- 610: Passstift
- 615: Bohrung
- 620: Verbindungselement

## Patentansprüche

1. Zusammenbau von einer Ausrückeinrichtung (100) für eine Reibkupplung und einer Kupplungsglocke (105), wobei die Ausrückeinrichtung (100) folgende Elemente umfasst:
- einen Aktuator (120, 125) zur axialen Betätigung der Reibkupplung,
- wobei der Aktuator (120, 125) dazu eingerichtet ist, mittels eines Fluids hydraulisch betätigt zu werden; und
- wenigstens ein Trägerelement (115) mit einem integrierten Befestigungspunkt (135) zur Abstützung des Aktuators (120, 125) an der Kupplungsglocke (105) und einer axialen Anlagefläche (140) zur Anlage an der Kupplungsglocke (105) im Bereich der Drehachse (110); wobei
- im Trägerelement (115) axiale Anschlüsse (150) für das hydraulische Fluid in einem Bereich (C) vorgesehen sind, der radial zwischen der axialen Anlagefläche (140) und den Befestigungspunkten (135) liegt,
- das Trägerelement (115) einstückig mit einem Gehäuse der Ausrückeinrichtung (100) ausgeführt ist, und
- das Trägerelement (115) eine axiale Anlagefläche (140) zur Anlage an der Kupplungsglocke (105) aufweist, und
- das Trägerelement (115) so geformt ist, dass die Befestigungspunkte (135) axial jeweils durch einen vorbestimmten Spalt (220) von der Kupplungsglocke (105) getrennt sind, wenn die Anlagefläche (140) an der Kupplungsglocke (105) anliegt, so dass das Trägerelement (115) durch Annähern der Befestigungspunkte (135) an die Kupplungsglocke (105) axial vorgespannt werden kann, um die axialen Anschlüsse (150) fluiddicht zu verbinden.

2. Zusammenbau nach Anspruch 1, wobei die Ausrückeinrichtung (100) dazu eingerichtet ist, eine weitere Reibkupplung unabhängig von der anderen Reibkupplung auszurücken, und das Trägerelement (115) einen weiteren axialen Anschluss (150) für Fluid umfasst.

3. Zusammenbau nach einem der vorangehenden Ansprüche, wobei ein axiales Federelement zur Verbindung der Befestigungspunkte (135) mit der Kupplungsglocke (105) vorgesehen ist.

4. Zusammenbau nach einem der vorangehenden Ansprüche, wobei das Trägerelement (115) ein hydraulisches Anschlusselement (605) zur Aufnahme der Anschlüsse (150) und ein am Anschlusselement (605) befestigtes, im Wesentlichen scheibenförmiges Verbindungselement (620) zur Anbringung an der Kupplungsglocke (105) umfasst.

5. Zusammenbau nach einem der vorangehenden Ansprüche, wobei eine Passeinrichtung (610, 614) zur Sicherstellung einer eindeutigen rotatorischen Einbaulage des Trägerelements (115) vorgesehen ist.

6. Zusammenbau nach einem der vorangehenden Ansprüche, wobei zwei benachbarte Winkel zwischen Befestigungspunkten (135) bezüglich der Drehachse (110) voneinander verschieden sind.

7. Zusammenbau nach einem der vorangehenden Ansprüche, wobei das Trägerelement (115) eine radiale Anlagefläche (145) zur Anlage an der Kupplungsglocke (105) im Bereich der Drehachse (110) aufweist, um eine Zentrierung der Ausrückeinrichtung (100) bezüglich der Kupplungsglocke (105) sicher zu stellen.

## Claims

1. An assembly of a release device (100) for a friction clutch and of a clutch housing (105), wherein the release device (100) comprises the following elements:
- an actuator (120, 125) for axially actuating the friction clutch,
- wherein the actuator (120, 125) is set up to be actuated hydraulically by means of a fluid; and
- at least one support element (115) having an integrated fastening point (135) for supporting the actuator (120, 125) on the clutch housing (105) and an axial contact surface (140) for contacting the clutch housing (105) in the region of the axis of rotation (110);
wherein
- axial connections (150) for the hydraulic fluid are provided in the support element (115) in a region (C) which lies radially between the axial contact surface (140) and the fastening points (135),
- the support element (115) is formed in one piece with a housing of the release device (100), and
- the support element (115) has an axial contact surface (140) for contacting the clutch housing (105), and
- the support element (115) is shaped such that the fastening points (135) are axially separated from the clutch housing (105) by a predetermined gap (220) when the contact surface (140) abuts against the clutch housing (105), such that the support element (115) can be axially pre-stressed by moving the fastening points (135) closer to the clutch housing (105), in order to connect the axial connections (150) in a fluid-tight manner.

2. The assembly according to claim 1, wherein the release device (100) is set up to release a further friction clutch independently of the other friction clutch, and the support element (115) comprises a further axial connection (150) for fluid.

3. The assembly according to any one of the preceding claims, wherein an axial spring element is provided for connecting the fastening points (135) to the clutch housing (105).

4. The assembly according to any one of the preceding claims, wherein the support element (115) comprises a hydraulic connector element (605) for receiving the connections (150) and a substantially disc-shaped connection element (620), fastened to the connector element (605), for attachment to the clutch housing (105).

5. The assembly according to any one of the preceding claims, wherein a fitting device (610, 614) is provided to ensure a clear rotational installation position of the support element (115).

6. The assembly according to any one of the preceding claims, wherein two adjacent angles between fastening points (135) are different from one another with respect to the axis of rotation (110).

7. The assembly according to any one of the preceding claims, wherein the support element (115) has a radial contact surface (145) for contacting the clutch housing (105) in the region of the axis of rotation (110) in order to ensure the centring of the release device (100) with respect to the clutch housing (105).

## Revendications

1. Assemblage d'un dispositif de débrayage (100) pour un embrayage à friction et d'une cloche d'embrayage (105), le dispositif de débrayage (100) comprenant les éléments suivants :
- un actionneur (120, 125) pour actionner axialement l'embrayage à friction,
- l'actionneur (120, 125) étant conçu pour être actionné hydrauliquement au moyen d'un fluide ; et
- au moins un élément de support (115) comprenant un point de fixation intégré (135) pour que l'actionneur (120, 125) s'appuie à la cloche d'embrayage (105) et une surface de contact axiale (140) pour venir en contact avec la cloche d'embrayage (105) dans la région de l'axe de rotation (110) ;
- des connexions axiales (150) pour le fluide hydraulique étant prévues dans l'élément de support (115) dans une région (C) qui se situe radialement entre la surface de contact axiale (140) et les points de fixation (135),
- l'élément de support (115) étant conçu d'une seule pièce avec un boîtier du dispositif de débrayage (100) et
- l'élément de support (115) présentant une surface de contact axiale (140) pour venir en contact avec la cloche d'embrayage (105) et
- l'élément de support (115) ayant une forme telle que chacun des points de fixation (135) sont séparés axialement de la cloche d'embrayage (105) par un espace prédéfini (220) lorsque la surface de contact (140) repose sur la cloche d'embrayage (105), de sorte que l'élément de support (115) puisse être précontraint axialement en approchant les points de fixation (135) sur la cloche d'embrayage (105) afin de connecter les connexions axiales (150) de manière étanche aux fluides.

2. Assemblage selon la revendication 1, le dispositif de débrayage (100) étant conçu pour débrayer un embrayage à friction supplémentaire indépendamment de l'autre embrayage à friction et l'élément de support (115) comprenant une autre connexion axiale (150) pour le fluide.

3. Assemblage selon l'une quelconque des revendications précédentes, un élément à ressort axial servant à relier les points de fixation (135) à la cloche d'embrayage (105).

4. Assemblage selon l'une quelconque des revendications précédentes, l'élément de support (115) comprenant un élément de connexion hydraulique (605) pour recevoir les connexions (150) et un élément de connexion (620) sensiblement discoïde fixé à l'élément de connexion (605) pour le montage sur la cloche d'embrayage (105).

5. Assemblage selon l'une quelconque des revendications précédentes, un dispositif de repérage (610, 614) servant à assurer une position d'installation unique en rotation de l'élément de support (115).

6. Assemblage selon l'une quelconque des revendications précédentes, deux angles adjacents entre des points de fixation (135) par rapport à l'axe de rotation (110) étant différents l'un de l'autre.

7. Assemblage selon l'une quelconque des revendications précédentes, l'élément de support (115) présentant une surface de contact radiale (145) pour venir en contact avec la cloche d'embrayage (105) dans la région de l'axe de rotation (110) afin d'assurer le centrage du dispositif de débrayage (100) par rapport à la cloche d'embrayage (105).
